# EUROPÄISCHE PATENTANMELDUNG

(11) **EP 3 907 158 A1**
(43) Veröffentlichungstag der Anmeldung: **10.11.2021**
(21) Anmeldenummer: 20173768.1
(22) Anmeldetag: 08.05.2020
(51) Int. Cl.: B65D 85/804

(54) **PORTIONENKAPSEL UND VERFAHREN ZUR HERSTELLUNG EINER PORTIONENKAPSEL**

(71) Anmelder: Tchibo GmbH, 22297 Hamburg (DE)
(72) Erfinder: BRÖCKEL, Jens, 22303 Hamburg (DE)
(74) Vertreter: Frei Patent Attorneys

(57) **Zusammenfassung**

Die Erfindung ist auf dem Gebiet der Zubereitung eines Getränks, insbesondere Kaffee, unter Verwendung einer Portionenkapsel angesiedelt und betrifft eine Portionenkapsel 1 mit einem Basiselement 11 zur Aufnahme eines Extraktionsguts und ein Verfahren zur Herstellung der Portionenkapsel. Die Portionenkapsel 1 weist einen Bodenbereich 16 und eine umlaufende Seitenwand 12 auf, wobei der Bodenbereich und die umlaufende Seitenwand einen Innenraum bilden. Zumindest die umlaufende Seitenwand 12 umfasst ein Zellulose-basiertes Blatt 2 und ist durch eine vollständige Wicklung des Zellulose-basierten Blatts 2 um eine Basiselementachse 15 gebildet.

## Beschreibung

Die Erfindung ist auf dem Gebiet der Vorrichtungen und Verfahren zum Zubereiten von Getränken mittels in eine Getränkekapsel eingeführter Flüssigkeit angesiedelt, wobei die Getränkekapsel eine lösliche Nahrungsmittelsubstanz enthält, aus welcher durch Einspritzen von Wasser ein Getränk oder Getränkebestandteil zubereitet werden kann. Die Erfindung ist insbesondere auf dem Gebiet der Zubereitung von Kaffee unter Verwendung einer Kaffeekapsel angesiedelt. Die Erfindung betrifft insbesondere eine Portionenkapsel und ein Verfahren zur Herstellung der Portionenkapsel.

Unter den Systemen zum Zubereiten von Getränken sind die sogenannten Kaffeekapselsysteme (es gibt sie auch in Varianten zur Zubereitung von Tee) bekannt, bei denen im Allgemeinen heisses Wasser meist unter Druck in eine Kapsel eingeführt wird, um durch Extraktion ein Kaffee- oder Teegetränk zuzubereiten. Für das Einführen des heissen Wassers wird die Kapsel oft auf der einen Seite (Injektionsseite) angestochen. Für das Ausleiten des gebrühten Getränks, im Allgemeinen auf der anderen Seite der Kapsel (der Extraktionsseite) sind verschiedene Möglichkeiten bekannt. Einerseits gibt es Systeme, bei denen auch extraktionsseitig ein Anstechen durch entsprechende Perforationsdorne vorgesehen ist. Anderseits sind Systeme bekannt, bei denen eine extraktionsseitige Begrenzung der Kapsel unter dem Innendruck während des Brühprozesses angestochen oder angerissen wird, wofür ein kapselexternes (in der Brühkammer der entsprechenden Kaffeemaschine vorhandenes) oder ein kapselinternes Mittel vorhanden sein kann. Schliesslich gibt es auch Kapseln, die bereits geöffnet sind, bei denen also keine Kapselwandung/Membran angestochen oder angerissen werden muss um das Getränk auszuleiten.

Am weitesten verbreitet sind Kapseln aus Materialien, die weder biologisch abbaubar sind noch aus erneuerbaren Rohstoffen bestehen. Die Kapseln bestehen zu einem hohen Anteil beispielsweise aus Aluminium oder aus Kunststoff, beispielsweise Polypropylen (PP). Solche Kapseln können sowohl für die Lagerung (z.B. Dichtigkeit, insbesondere Luft-/Sauerstoff-Undurchlässigkeit) als auch für die Anwendung (z.B. Wärmeformbeständigkeit, Anstechverhalten etc.) vorteilhafte Eigenschaften haben. Ein grosser Nachteil dieser Kapseln ist der nach der Verwendung anfallende Abfall beziehungsweise der nötige hohe Aufwand zur Wiederverwertung der in den Kapseln verwendeten Materialien. Letzterer umfasst das Einsammeln der in der Regel im privaten Bereich verwendenden Kapseln, der Transport derselben zu RecyclingAnlagen und den Wiederaufbereitungsprozess selbst. In anderen Worten, selbst für die Wiederverwertung müssen beachtliche Ressourcen (Zeit, Energie, aber auch Transportkosten) aufgewendet werden, die wiederum die Umwelt belasten können (z.B. CO₂-Emissionen bei Transport und zur Gewinnung der bei der Wiederaufbereitung nötigen Energie). Ferner geht auch bei der Wiederaufbereitung das in der Kapsel enthaltene Extraktionsgut in der Regel verloren.

Die Verwendung von weniger ressourcenintensiven Materialien für Portionenkapseln ist an sich bekannt. Insbesondere ist der Einsatz von Bio-Kunststoffen diskutiert worden. Als solche werden einerseits Kunststoffe bezeichnet, die aus einem nachwachsenden Rohstoff gefertigt sind (sogenannte biobasierte Kunststoffe). Anderseits sind Bio-Kunststoffe Kunststoffe, die biologisch abbaubar sind (sogenannt bioabbaubare Kunststoffe). Die für die Herstellung von Portionenkapseln vorgeschlagenen Kunststoffe sind bioabbaubar und beinhalten teilweise einen Anteil von biobasierten Kunststoffen.

Beispielsweise zeigt WO 2011/015973 A1 eine Kapsel, die vollständig aus biologisch abbaubarem Material besteht, wobei die Realisierung der die Kapsel verschliessenden Membran im Vordergrund der Lehre von WO 2011/015973 A1 steht und auf das verwendete Material nicht eingegangen wird.

DE 202016104950 U1 zeigt eine hermetisch verschliessbare Portionspackung oder einen hermetisch verschliessbaren Portionsbeutel mit einer biologisch abbaubaren Kapsel oder einem biologisch abbaubaren Pad, wobei die Portionspackung oder der Portionsbeutel vollständig aus biologisch abbaubarem Material besteht. Biokunststoff, wie Polyactid (PLA) oder Mater-Bi® werden als Beispiele des verwendeten Materials genannt.

WO 2017/186743 A1 offenbart die Verwendung eines Bio-Werkstoffs unter anderem für Kaffee- und Teekapseln, wobei der Bio-Werkstoff einen biologisch abbaubaren Kunststoff und Sonnenblumenkernschalen bzw. Sonnenblumenkernhülsen umfasst.

Ein Nachteil der Verwendung von Bio-Kunststoffen liegt darin, dass diese sowohl in der Herstellung als auch in der Weiterverarbeitung zur Portionenkapsel aufwendig und teuer sein können.

Als Alternative zu Bio-Kunststoffen wurde die Verwendung von Zellulose basierten Materialien vorgeschlagen.

WO 2017/017704 A1 zeigt eine biologisch abbaubare Kapsel aus einem Holzwerkstoff, die über Verstärkungselemente verfügt, um dem während des Brühprozess in der Kapsel vorherrschenden Drucks widerstehen zu können.

WO 2017/072808 A1 offenbart eine Kapsel mit einem Aufnahmekörper aus einem kompostierbaren und/oder biologisch abbaubaren Material und einem Deckel, der teilweise aus einem Fasermaterial, zum Beispiel Papier, besteht.

WO 2019/002420 A1 offenbart eine Kapsel, die zu 100% aus biologisch abbaubarem und/oder kompostierbarem Material besteht. Die Kapsel ist aus holzartigem Material gefertigt und es kommen keine Materialien zum Einsatz, die nicht organisch sind.

US 2014/0335236 A1 zeigt eine Kapsel, die im Wesentlichen aus Fasermaterial besteht, das insbesondere aus Bambus, Bagasse und anderen Pflanzen, die im Überfluss und schneller als Bäume wachsen, gewonnen wird.

Die Verwendung von Zellulose basiertem Material für Portionenkapseln hat verschiedene Nachteile. So ist die Ausgestaltung der Kapsel aufwendig und deshalb entsprechend teuer, wie beispielsweise aus WO 2017/017704 A1, aber auch aus WO 2017/072808 A1 und WO 2019/002420 A1 hervorgeht. Zudem nimmt die Haltbarkeit der unverbrauchten Portionenkapseln ab und die Anforderungen an die Lagerung in der Regel zu. Ferner wird in Zusammenhang mit Portionenkapseln, die auf Zellulose basieren, oftmals eine Beeinträchtigung des Geschmacks, insbesondere eine Abnahme der Geschmacksintensität, bemängelt. Dies ist bei Portionenkapseln für die Zubereitung von Nahrungsmitteln, die nach der Erzeugung aus der Portionenkapsel heraus, nicht mehr nachträglich verfeinert, z.B. aufbearbeitet oder nachgewürzt, werden können, unbefriedigend. Kaffee-Portionenkapseln sind ein Beispiel für Portionenkapseln, bei denen eine Beeinträchtigung des Geschmacks verheerend ist.

Es ist eine Aufgabe der vorliegenden Erfindung, einen oder mehrere der oben genannten Nachteile bei Portionenkapseln gemäss dem Stand der Technik zu vermindern. Insbesondere ist es eine Aufgabe der Erfindung, einen oder mehrere der oben genannten Nachteile bei Portionenkapseln, die ein Zellulose basiertes Material als wesentlichen Bestandteil aufweisen, zu vermindern.

Insbesondere ist es eine Aufgabe der Erfindung, eine Portionenkapsel zur Verfügung zu stellen, die ein Zellulose basiertes Material als wesentlichen Bestandteil aufweist und die im Vergleich zu Portionenkapseln desselben Typs einfacher herzustellen ist, billiger herzustellen ist, mit Blick auf die Halterbarkeit verbessert ist und/oder mit Blick auf eine Geschmacksbeeinträchtigung verbessert ist.

Wenn nachfolgend auf ein biologisch abbaubaren Kunststoff Bezug genommen wird, ist damit mindestens eine biologisch Abbaubarkeit gemäss EN 13432 (Stand Ende 2019) oder ASTM 6400 (Stand Ende 2019) gemeint.

Eine erfindungsgemässe Portionenkapsel weist ein Basiselement mit einem Bodenbereich und einer umlaufenden Seitenwand auf, wobei der Bodenbereich und die umlaufende Seitenwand einen Innenraum bilden. Zumindest die umlaufende Seitenwand umfasst ein Zellulose-basiertes Blatt. Die umlaufende Seitenwand wird durch mindestens eine vollständige Wicklung des Zellulose-basierten Blatts um eine Basiselementachse gebildet.

Das heisst, dass die grundlegende Form der Portionenkapsel durch blosses Verformen des Zellulose-basiertes Blatts zu einer um eine Achse herum geschlossenen Form erzeugt wird, beziehungsweise dass die grundlegende Form der Portionenkapsel durch das entsprechend verformte Zellulose-basierte Blatt gegeben ist. Dabei ist das Zellulose-basierte Blatt ausser den direkt zur Verformung benötigten Kräften keinen weiteren Einflüssen ausgesetzt. Darin unterscheidet sich die Portionenkapsel und das Verfahren zu dessen Herstellung von den üblicherweise verwendeten Portionenkapseln und Herstellungsfahren, die beispielsweise auf Thermoformen, Spritzguss oder Tiefziehen dafür geeigneter Materialen basieren.

Die umlaufende Seitenwand kann einen Fixierbereich aufweisen, in welchem zumindest die Wicklung dauerhaft fixiert ist. Die Fixierung kann derart sein, dass ein Fluss von festen, flüssigen oder gasförmigen Stoffen durch den Fixierbereich nicht möglich ist. Die Fixierung kann beispielsweise mittels Klebung oder Ultraschallschweissen, insbesondere wie nachfolgend noch im Detail beschrieben, realisiert sein.

Die Undurchlässigkeit des Fixierbereichs für Flüssigkeit und/oder gasförmige Stoffe kann erhöht werden, indem eine Versiegelungsschicht oder eine Barriereschicht oder eine Versiegelungsschicht und eine Barriereschicht in einer der nachfolgend noch beschriebenen Ausführungsformen den Fixierbereich innenseitig und/oder aussenseitig bedeckt.

Alternativ oder ergänzend kann die besagte Undurchlässigkeit durch das Anbringen eines Klebestreifens in einer Region, die den Fixierbereich vollständig oder zumindest mehrheitlich umfasst, erhöht werden.

Es können, wie nachfolgend beschrieben, weitere Elemente der Portionenkapsel durch blosses Verformen eines oder mehrere Zellulose-basierten Blätter erzeugt werden.

Wie nachfolgend beschrieben, kann sogar die gesamte Portionenkapsel durch blosses Verformen eines oder mehrere Zellulose-basierten Blätter erzeugt werden.

Die umlaufende Seitenwand kann das Zellulose-basierte Blatt umfassen, indem es im Wesentlichen aus dem Zellulose-basierten Blatt besteht. "Im Wesentlichen" bedeutet in diesem Zusammenhang, dass die umlaufende Seitenwand weitere Bestandteile umfassen kann, dass aber die Form und Stabilität der umlaufenden Seitenwand durch das Zellulose-basierte Blatt definiert sind. Beispielsweise kann die umlaufende Seitenwand weitere Bestandteile nur in Form von Schichten (beispielsweise die nachfolgend beschrieben Versiegelungs- und Barriereschichten), Beschriftungen, Codierungen etc. umfassen.

In einer Ausführungsform umfasst die umlaufende Seitenwand das Zellulose-basierte Blatt derart, dass die Form und mechanische Stabilität der umlaufenden Seitenwand durch das Zellulose-basierte Blatt gegeben sind.

Unter einem Zellulose-basierten Blatt wird ein Bauteil verstanden, das sich flächig ausdehnt, eine beschränkte Dicke aufweist, verformbar ist und zu einem hohen Anteil aus Zellulose besteht.

Das Bauteil (Zellulose-basierte Blatt) ist insbesondere nicht verformbar oder nur destruktiv verformbar durch eine Kraft, die entlang der durch die flächige Ausdehnung des Bauteils definierte Fläche verläuft, und es ist verformbar durch eine Kraft, die eine Komponente senkrecht zur besagten Fläche aufweist.

Die flächige Ausdehnung ist in der Regel derart, dass die umlaufende Seitenwand einstückig gebildet werden kann. Wenn die umlaufende Seitenwand durch eine Vielzahl von Wicklungen des Zellulose-basierten Blatts gebildet wird, kann die flächige Ausdehnung derart sein, dass die Vielzahl von Wicklungen einstückig gebildet werden können. Optional kann die flächige Ausdehnung derart sein, dass weitere Elemente der Portionenkapsel, insbesondere der Bodenbereich und/oder ein Kapseldeckel durch das Zellulose-basierte Blatt gebildet werden kann. Solche Ausführungsformen werden weiter unten im Detail beschrieben.

Die Dicke des Zellulose-basierten Blatts kann insbesondere kleiner als 5, 4, 3 oder 2 mm sein. Die Dicke kann grösser als 0.1, 0.2, 0.3, 0.4 oder 0.5 mm sein. Besonders interessant sind Dicken ab 0.2 mm. Beispielsweise kann die Dicke zwischen 0.2 und 3 mm, insbesondere zwischen 0.5 und 2 mm liegen.

Das Zellulose-basierte Blatt kann insbesondere ein Papier, Karton oder Pappe sein. In anderen Worten kann zumindest die umlaufende Seitenwand auf einem Blatt Papier, Karton oder Pappe basieren.

In einer Ausführungsform ist das Basiselement eine Wickeldose.

In der Regel ist die mindestens eine vollständige Wicklung eine Wicklung um eine gerade Basiselementachse.

Das Basiselement kann becherförmig ausgebildet sein. Beispielsweise kann sich der Innenraum entlang der Basiselementachse, die in dieser Ausführungsform einer Becherachse ist, von einer Öffnung in Richtung des Bodenbereichs erstrecken. Die umlaufende Seitenwand kann den Innenbereich in radiale Richtungen (radial in Bezug auf die Becherachse) beschränken.

In einer Ausführungsform weist die umlaufende Seitenwand mindestens einen planaren Bereich und mindestens einen Eckbereich auf. Das heisst, die umlaufende Wicklung ist keine "runde" Wicklung, sondern sie weist mindestens einen planaren Bereich und mindestens einen Eckbereich auf. Dies kann beispielsweise durch Verwendung eines Wickelkerns und/oder durch Vorbearbeitung des Zellulose-basierten Blatts erreicht werden.

Das Zellulose-basierte Blatt kann mindestens eine Soll-Faltstelle aufweisen. Die Soll-Faltstelle oder die Soll-Faltstellen können so angeordnet und eingerichtet sein, dass sich eine Soll-Form der umlaufenden Seitenwand, und damit der Portionenkapsel, bei Faltung entlang der Soll-Faltstelle(n) ergibt.

Das Basiselement kann becherartig sein und eine rechteckige, insbesondere quadratische, Grundform aufweisen.

In anderen Worten kann das Basiselement die Basiselementachse (Becherachse) aufweisen, entlang welcher sich die Öffnung erstreckt. Das Basiselement kann dann in einem Schnitt senkrecht zur Basiselementachse (Becherachse) eine rechteckige, insbesondere quadratische Grundform aufweisen.

Das Basiselement kann die Form eines Quaders, insbesondere eines Würfels, aufweisen, wobei eine Seite des Quaders, beziehungsweise Würfels offen ist.

Ein Kapseldeckel, insbesondere ein Kapseldeckel wie er nachfolgend noch beschreiben wird, kann eine Form aufweisen, die diese Öffnung des Quaders oder Würfels verschliesst. Das heisst, der Kapseldeckel kann im Wesentlichen (z.B. bis auf Elemente, die zur Befestigung und/oder Funktionalität des Kapseldeckels nötig sind) die Form einer Seite des durch das Basiselement geformten Quaders oder Würfels haben.

In einer Ausführungsform weist das Zellulose-basierte Blatt eine Versiegelungsschicht oder eine Barriereschicht oder eine Versiegelungsschicht und eine Barriereschicht auf.

Die Versiegelungsschicht, die Barriereschicht oder die Versiegelungsschicht und die Barriereschicht können insbesondere auf dem Zellulose-basierte Blatt angeordnet sein. Das heisst, das Zellulose-basierte Blatt kann eine Art Substrat bilden, auf dem die Versiegelungsschicht, die Barriereschicht oder die Versiegelungsschicht und die Barriereschicht angebracht sind.

Die Versiegelungsschicht kann insbesondere eingerichtet sein, die Flüssigkeitsdurchlässigkeit, insbesondere Wasserdurchlässigkeit, durch das Zellulose-basierte Blatt zu reduzieren.

Die Versiegelungsschicht ist folglich in der Regel eine Flüssigkeitsversiegelungsschicht.

Die Versiegelungsschicht kann eingerichtete sein, Poren des Zellulose-basierten Blatts zu verschliessen.

Die Versiegelungsschicht kann bevorzugt aus einem biologisch abbaubaren Material bestehen. Insbesondere kann die Versiegelungsschicht aus einem Bio-Kunststoff, insbesondere einem biologisch abbaubaren Kunststoff, beispielsweise Polylactid (PLA), bestehen. Andere biologisch abbaubare Kunststoffe, wie beispielsweise Polybutylenadipat-terephthalta (PBAT) oder ein Gemisch aus Polybutylenadipat-terephthalta (PBAT) und Polylactid (PLA) sind denkbar. Ferner haben sich Verbindungen, die ein Biokunststoff und Polyvinylalkohol (PVOH) umfassen, beispielsweise PLA/PVOH-Verbindungen mit beispielsweise 20-30% PVOH Massenanteil, als sehr interessant erwiesen.

Die Barriereschicht kann insbesondere eingerichtet sein, die Durchlässigkeit von gasförmigen Stoffen, insbesondere Sauerstoff aber auch Wasserdampf, durch das Zellulose-basierte Blatt zu reduzieren. Das Vorhandensein von Sauerstoff in der Portionenkapsel beschleunigt den Aromaabbau und ist deshalb ein Haupttreiber für eine Geschmacksbeeinträchtigung.

Die Barriereschicht ist folglich in der Regel eine Gastransmissionsbarriereschicht.

Die Barriereschicht kann eine Sauerstoffbarriereschicht sein.

Bei der Barriereschicht kann es sich insbesondere um eine SiOₓ-Schicht, eine AlOₓ-Schicht oder eine Kombination aus SiOₓ- und AlOₓ-Beschichtung, beispielsweise eine Abfolge von mindestens einer SiOₓ- und einer AlOₓ-Schicht, handeln.

SiOₓ und AlOₓ haben den Vorteil, dass diese Materialien nach der Wicklung des Zellulose-basierten Blatts oder sogar nach dem Ausformen des Basiselements aufgebracht werden können, beispielsweise durch Vakuumbeschichtung. Dadurch ist eine nahtlose Beschichtung möglich. Insbesondere bei einem Aufbringen durch Vakuumbeschichtung kann ferner die Ablagerung der Barriereschicht auf einem allfällig vorhandenen Flansch zur Verschweissung mit dem Kapseldeckel verhindert werden, beispielsweise durch Abdeckung (Maskierung) des Flansches während der Beschichtung.

In einer Ausführungsform ist die Versiegelungsschicht, die Barriereschicht oder die Versiegelungsschicht und die Barriereschicht gegen den Innenraum hin auf dem Zellulose-basierten Blatt angebracht.

In anderen Worten kann das Zellulose-basierte Blatt, aus dem die umlaufende Seitenwand gebildet ist, die Versiegelungsschicht oder die Barriereschicht oder die Versiegelungsschicht und die Barriereschicht so aufweisen, dass die Versiegelungsschicht oder die Barriereschicht oder die Versiegelungsschicht und die Barriereschicht gegen den Innenraum hin angeordnet sind.

Die Versiegelungsschicht, die Barriereschicht oder die Versiegelungsschicht und die Barriereschicht können den gesamten Bereich des Zellulose-basierten Blatts, der den Innenraum bildet oder mitbildet, durchgehend bedecken.

Beispielseise kann die Versiegelungsschicht oder die Barriereschicht oder die Versiegelungsschicht und die Barriereschicht den gesamten, dem Innenraum zugewandten Bereich des Zellulose-basierten Blatts durchgehend bedecken. Mit anderen Worten, kann dieser Bereich des Innenraums mit der Versiegelungsschicht oder der Barriereschicht oder der Versiegelungsschicht und der Barriereschicht ausgekleidet sein.

"Durchgehend bedecken" bedeutet in diesem Zusammenhang, dass keine Öffnungen oder Perforationen in der Versiegelungsschicht oder der Barriereschicht oder der Versiegelungsschicht und der Barriereschicht vorhanden sind.

In einer Ausführungsform weist das Zellulose-basierte Blatt gegen den Innenraum hin eine Versiegelungsschicht auf, die von einer Barriereschicht bedeckt ist. Die Versiegelungsschicht und die Barriereschicht kann auf eine der oben dargelegten Weisen realisiert sein. Beispielsweise kann die Versiegelungsschicht aus PLA und die Barriereschicht kann aus SiOₓ bestehen. Die Barriereschicht kann insbesondere eine Sauerstoffbarriereschicht sein. Die Versiegelungsschicht und die Barriereschicht können das Zellulose-basierten Blatt zumindest gegen den Innenraum hin durchgehend bedecken.

Unabhängig von der konkreten Ausführungsform kann zwischen dem Zellulose-basierten Blatt und einer Schicht und/oder zwischen zwei aneinandergrenzenden Schichten eine Haftschicht vorhanden sein.

In einer Ausführungsform ist eine Versiegelungsschicht, eine Barriereschicht oder die Versiegelungsschicht und die Barriereschicht nach aussen hin auf dem Zellulose-basierten Blatt angebracht.

Die nach aussen hin angebrachte Versiegelungsschicht, Barriereschicht oder Versiegelungsschicht und Barriereschicht kann zusätzlich zu der gegen den Innenraum hin auf dem Zellulose-basierten Blatt angebrachten Versiegelungsschicht, Barriereschicht oder Versiegelungsschicht und Barriereschicht vorhanden sein.

Falls die besagte Schicht oder die besagten Schichten zusätzlich sind, kann dies zu einer verbesserten Abdichtung des Innenraums gegen aussen hin führen. Ferner können dadurch Verschweissungen, beispielsweise die Verschweissung mit einem Kapseldeckel oder das Verschweissen der Wicklung, vereinfacht werden.

Eine nach aussen hin angebrachte Versiegelungsschicht, Barriereschicht oder Versiegelungsschicht und Barriereschicht kann auf eine Art realisiert sein, wie es in Zusammenhang mit der gegen den Innenraum hin angebrachte Versiegelungsschicht, Barriereschicht oder Versiegelungsschicht und Barriereschicht erläutert wurde.

In Ausführungsformen kann mindestens ein zur umlaufenden Seitenwand weiteres Teil der Portionenkapsel das Zellulose-basierte Blatt umfassen oder im Wesentlichen daraus bestehen. Der Bereich des Zellulose-basierten Blatts, der das weitere Teil bildet, kann eine Versiegelungsschicht und/oder eine Barriereschicht wie oben beschrieben umfassen.

"Im Wesentlichen" bedeutet in diesem Zusammenhang wiederum, dass das mindestens eine weitere Teil weitere Bestandteile umfassen kann, dass aber die Form und Stabilität des mindestens einen weiteren Teils durch das Zellulose-basierte Blatt definiert sind. Beispielsweise können weitere Bestandteile nur in Form von Schichten (beispielsweise wie zuvor beschrieben), Beschriftungen, Codierungen etc. umfassen.

Insbesondere kann der Bodenbereich oder der Kapseldeckel ein weiteres Teil sein. Es ist auch vorstellbar, dass sowohl der Bodenbereich als auch der Kapseldeckel weitere Bereiche in obigem Sinne sind.

In einer Ausführungsform ist der Bodenbereich aus dem Zellulose-basierten und optional bevorzugt die Versiegelungsschicht und/oder die Barriereschicht wie oben beschrieben umfassenden Blatt geformt.

In einer Ausführungsform ist alternativ oder ergänzend zum Bodenbereich der Kapseldeckel aus dem Zellulose-basierten und optional bevorzugt die Versiegelungsschicht und/oder die Barriereschicht wie oben beschrieben umfassenden Blatt geformt.

Beispielsweise kann die Portionenkapsel das Zellulose-basierte und allenfalls die Versiegelungsschicht und/oder die Barriereschicht umfassende Blatt wie folgt aufweisen:
- Das Zellulose-basierte Blatt ist so geformt, beispielsweise so zugeschnitten, dass die Portionenkapsel die umlaufende Seitenwand durch mindestens eine vollständige Wicklung und den Bodenbereich und/oder den Kapseldeckel in Form eines Faltbereich umfasst. In anderen Worten wird der Bodenbereich und/oder der Kapseldeckel durch einen umgefalteten Bereich des Zellulose-basierten Blatts geformt.
   Der Faltbereich für den Bodenbereich und/oder der Faltbereich für den Kapseldeckel können so ausgebildet sein, dass der entsprechende Faltbereich nach der Faltung den Innenraum im Gebiet, in welchem der entsprechende Faltbereich angeordnet ist, vollständig abschliesst.
   Der Faltbereich für den Bodenbereich und/oder der Faltbereich für den Kapseldeckel können so ausgebildet sein, dass nach der Faltung der Innenraum im Gebiet des besagten Faltbereichs beim Anliegen einer Kraft, die vom Innenbereich her auf den Faltbereich drückt, versiegelt wird. In anderen Worten kann der Faltbereich für den Bodenbereich und/oder der Faltbereich für den Kapseldeckel so ausgebildet sein, dass nach der Faltung eine aus dem Innenbereich auf den Faltbereich wirkende Kraft, Elemente des Faltbereichs gegeneinanderdrückt und so allenfalls vorhandene Öffnungen verschliesst.
   Alternative oder Ergänzend kann am Faltbereich für den Bodenbereich und/oder am Faltbereich für den Kapseldeckel ein Fixiermittel, insbesondere ein biologisch abbaubares Fixiermittel, beispielsweise ein biologisch abbaubarer Klebstoff, angebracht sein.
- Der Bereich des Zellulose-basierten Blatts, der den Bodenbereich bildet, und/oder der Bereich des Zellulose-basierten Blatts, der den Kapseldeckel bildet, umfasst eine Versiegelungsschicht oder eine Barriereschicht oder eine Versiegelungsschicht und eine Barriereschicht der zuvor beschriebenen Arten. Die Versiegelungsschicht oder die Barriereschicht oder die Versiegelungsschicht und die Barriereschicht können insbesondere dem Innenraum zugewandt angeordnet sein und den besagten Bereich des Zellulose-basierten Blatts so bedecken, dass der gesamte, dem Innenraum zugewandten Bereich durchgehend bedeckt ist.
   Die Versiegelungsschicht oder die Barriereschicht oder die Versiegelungsschicht und die Barriereschicht kann im besagten Bereich zusätzlich zu einer Versiegelungsschicht oder einer Barriereschicht oder einer Versiegelungsschicht und einer Barriereschicht in einem Bereich sein, der die umlaufende Seitenwand bildet.
   Insbesondere kann der Bereich des Zellulose-basierten Blatts, der die umlaufende Seitenwand und den Bodenbereich oder der die umlaufende Seitenwand und den Kapseldeckel oder der die umlaufende Seitenwand, den Bodenbereich und den Kapseldeckel bildet, die Versiegelungsschicht oder die Barriereschicht oder bevorzugt die Versiegelungsschicht und die Barriereschicht so umfassen, dass der gebildete Innenraum durchgehend mit der Versiegelungsschicht oder mit der Barriereschicht oder bevorzugt mit der Versiegelungsschicht und der Barriereschicht ausgekleidet ist. Das heisst, dass die Versiegelungsschicht oder die Barriereschicht oder bevorzugt die Versiegelungsschicht und die Barriereschicht in jedem der drei genannten Ausführungen des Zellulose-basierten Blatts den gesamte resultierenden, dem Innenraum zugewandten Bereich des Kapseldeckels durchgehend bedeckt.
   Insbesondere kann der Bereich des Zellulose-basierten Blatts, der die umlaufende Seitenwand, den Bodenbereich und den Kapseldeckel bildet, die Versiegelungsschicht oder die Barriereschicht oder bevorzugt die Versiegelungsschicht und die Barriereschicht so umfassen, dass der gesamte, in diesem Fall geschlossene, Innenraum der Portionenkapsel gesamthaft und durchgehend mit der Versiegelungsschicht oder mit der Barriereschicht oder bevorzugt mit der Versiegelungsschicht und der Barriereschicht ausgekleidet ist.

Falls der Bodenbereich und/oder der Kapseldeckel aus dem Zellulose-basierten und optional die Versiegelungsschicht und/oder die Barriereschicht wie oben beschrieben umfassenden Blatt geformt ist, kann die Portionenkapsel ein oder mehrere Befestigungsgebiete aufweisen, die einerseits die Formstabilität der Portionenkapsel garantieren und andererseits dafür sorgen, dass ein geschlossener Innenraum gebildet wird.

Falls beispielsweise der Bodenbereich aus dem Zellulose-basierten Blatt durch Umfalten geformt ist, kann der Bodenbereich ein Befestigungsgebiet aufweisen, durch das die Faltung dauerhaft und formstabil ist. Das Befestigungsgebiet erstreckt sich dabei vorteilhaft derart, dass nach dem Umfalten allenfalls vorhandene Lecks geschlossen werden.

Beispielsweise kann sich das Befestigungsgebiet entlang einer Linie erstrecken, wobei die Linie gekrümmt sein kann.

Das Befestigungsgebiet kann beispielsweise eine Bördelung, Klebung oder Schweissung, insbesondere eine Ultraschallschweissung wie in Zusammenhang mit der Befestigung des Kapseldeckels und/oder der Fixierung der Wicklung beschrieben, umfassen.

Falls der Kapseldeckel aus dem Zellulose-basierten Blatt durch Umfalten geformt ist, kann Analoges gelten.

Falls der Bodenbereich und/oder der Kapseldeckel aus dem Zellulose-basierten und optional die Versiegelungsschicht und/oder die Barriereschicht wie oben beschrieben umfassenden Blatt geformt ist, kann die Portionenkapsel ergänzend zu einem Befestigungsgebiet mindestens ein Versiegelungsgebiet aufweisen. Im Versiegelungsgebiet wird ein potentielles Leck geschlossen.

Das Versiegelungsgebiet kann ein lokal angebrachtes, insbesondere nach einer Umfaltung angebrachtes, ursprünglich flüssiges oder fliessfähiges, ausgehärtetes Material umfassen.

Das Versiegelungsgebiet und/oder das Befestigungsgebiet kann ein Material des Zellulose-basierten Blatts umfassen, das vorübergehend in einen fliessfähigen Zustand gebracht wurde.

Beim Material kann es sich beispielsweise um Material der Versiegelungsschicht handeln. Es ist aber auch denkbar, dass das Zellulose-basierte Blatt zur allenfalls vorhandenen Versiegelungsschicht zusätzliches Material, das in einen fliessfähigen Zustand bringbar ist, zumindest an einer Stelle eines potenziellen Lecks und/oder an einer geeigneten Befestigungsstelle aufweist. Insbesondere kann das Zellulose-basierte Blatt dieses Material an einem Rand des ungefalteten oder am Rand des ungewickelten oder am Rand des ungefalteten und ungewickelten Zellulose-basierten Blatts umfassen. Alternativ kann das Versiegelungsgebiet und/oder das Befestigungsgebiet Material umfassen, das nach der Faltung und/oder Wicklung angebracht worden ist. Beim Material kann es sich insbesondere um das in einen fliessfähigen Zustand bringbare Material handeln.

Alternativ zu einem Bodendeckel, der aus dem Zellulose-basierten Blatt gebildet ist, das auch die umlaufende Seitenwand bildet, kann die Portionenkapsel ein Zellulose-basiertes Bodenbereichs-Blatt aufweisen und der Bodenbereich kann aus diesem Zellulose-basierten Bodenbereichs-Blatt geformt sein.

In anderen Worten kann der Bodenbereich aus einem Zellulose-basierten Blatt geformt sein (dem Zellulose-basierten Bodenbereichs-Blatt), das ursprünglich vom Zellulose-basierten Blatt, das die umlaufende Seitenwand formt, separat war.

Das Zellulose-basierte Bodenbereichs-Blatt kann mit dem Zellulose-basierten Blatt, das die umlaufende Seitenwand bildet, strukturell identisch sein.

Alternativ kann sich das Zellulose-basierte Bodenbereichs-Blatt vom Zellulose-basierten Blatt, das die umlaufende Seitenwand bildet, strukturell unterscheiden. Beispielsweise kann sich das Zellulose-basierte Bodenbereichs-Blatt im Anstechverhalten und/oder im Abdichtungsverhalten gegen einen Injektor oder Extraktor hin, der das Zellulose-basierte Bodenbereichs-Blatt durchdringt, unterscheiden. Das Zellulose-basierte Bodenbereichs-Blatt kann sich beispielsweise in der Dicke und/oder in der Zusammensetzung vom Zellulose-basierten Blatt, das die umlaufende Seitenwand bildet, unterscheiden.

Das Zellulose-basierte Bodenbereichs-Blatt kann eine Versiegelungsschicht oder eine Barriereschicht oder eine Versiegelungsschicht und eine Barriereschicht auf eine der zuvor beschriebenen Arten umfassen.

Insbesondere kann die Versiegelungsschicht oder die Barriereschicht oder bevorzugt die Versiegelungsschicht und die Barriereschicht den gesamten Bereich des Zellulose-basierten Bodenbereichs-Blatts, der den Innenraum mitbildet, durchgehend, beispielsweise auf der dem Innenraum zugewandten Seite, bedecken.

Alternativ oder ergänzend, kann das Zellulose-basierte Bodenbereichs-Blatt eine Versiegelungsschicht oder eine Barriereschicht oder eine Versiegelungsschicht und eine Barriereschicht auf eine der zuvor beschriebenen Arten umfassen, die nach aussen hin angeordnet ist/sind.

In einer Ausführungsform ist der Bodenbereich an die umlaufende Seitenwand gebördelt.

Anders ausgedrückt, ist das Zellulose-basierte Bodenbereichs-Blatt an das Zellulose-basierte Blatt, das die umlaufende Seitenwand bildet, gebördelt.

Insbesondere ist das Zellulose-basierte Bodenbereichs-Blatt an das Zellulose-basierte Blatt, das die umlaufende Seitenwand bildet, umlaufend gebördelt.

Andere Befestigungsarten, beispielsweise die in Zusammenhang mit dem Kapseldeckel genannten, sind ebenfalls denkbar.

Die aneinander gebördelten oder anders aneinander befestigten Zellulose-basierten Blätter können eine Versiegelungsschicht oder eine Barriereschicht oder eine Versiegelungsschicht und eine Barriereschicht auf eine der zuvor beschriebenen Arten umfassen. Insbesondere kann mindestens eine der genannten Schichten so angeordnet sein, dass der gesamte durch die beiden Blätter gebildete Innenraum und/oder die gesamte durch die beiden Blätter gebildete Aussenfläche mit der Versiegelungsschicht oder der Barriereschicht oder er Versiegelungsschicht und der Barriereschicht durchgehend ausgekleidet ist.

Alternativ zu einem Kapseldeckel, der aus dem Zellulose-basierten Blatt gebildet ist, das auch die umlaufende Seitenwand bildet, kann die Portionenkapsel ein Zellulose-basiertes Kapseldeckel-Blatt aufweisen und der Kapseldeckel kann aus diesem Zellulose-basierten Bodenbereichs-Blatt geformt sein.

In anderen Worten kann der Kapseldeckel aus einem Zellulose-basierten Blatt geformt sein (dem Zellulose-basierten Kapseldeckel-Blatt), das ursprünglich vom Zellulose-basierten Blatt, das die umlaufende Seitenwand formt, separat war.

Das Zellulose-basierte Kapseldeckel-Blatt kann mit dem Zellulose-basierten Blatt, das die umlaufende Seitenwand bildet, strukturell identisch sein.

Alternativ kann sich das Zellulose-basierte Kapseldeckel-Blatt vom Zellulose-basierten Blatt, das die umlaufende Seitenwand bildet, strukturell unterscheiden. Beispielsweise kann sich das Zellulose-basierte Kapseldeckel-Blatt im Anstechverhalten und/oder im Abdichtungsverhalten gegen einen Injektor oder Extraktor hin, der das Zellulose-basierte Kapseldeckel-Blatt durchdringt, unterscheiden. Das Zellulose-basierte Kapseldeckel-Blatt kann sich beispielsweise in der Dicke und/oder in der Zusammensetzung vom Zellulose-basierten Blatt, das die umlaufende Seitenwand bildet, unterscheiden.

Das Zellulose-basierte Kapseldeckel-Blatt kann mit dem Zellulose-basierten Bodenbereichs-Blatt, strukturell identisch sein. In der Regel unterscheidet sich aber das Zellulose-basierte Kapseldeckel-Blatt vom Zellulose-basierten Bodenbereichs-Blatt beispielsweise in einer der zuvor genannten Eigenschaften. Ferner kann sich das Zellulose-basierte Kapseldeckel-Blatt in einem zusätzlichen Element, das es trägt, vom dem Zellulose-basierten Bodenbereichs-Blatt unterscheiden. Beispiele solcher zusätzlichen Elemente sind weiter unten beschreiben. Ferner kann sich das Zellulose-basierte Kapseldeckel-Blatt in Elementen vom Zellulose-basierten Bodenbereichs-Blatt unterscheiden, die mit der Befestigung des Zellulose-basierte Kapseldeckel-Blatt am Zellulose-basierten Blatt, das die umlaufende Seitenwand bildet, zusammenhängen.

In einer Ausführungsform ist der Kapseldeckel an die umlaufende Seitenwand gebördelt oder er ist eingerichtet, and die umlaufende Seitenwand gebördelt zu werden.

Anders ausgedrückt, ist das Zellulose-basierte Kapseldeckel-Blatt an das Zellulose-basierte Blatt, das die umlaufende Seitenwand bildet, gebördelt oder das Zellulose-basierte Kapseldeckel-Blatt ist eingerichtet, an das Zellulose-basierte Blatt, das die umlaufende Seitenwand bildet, gebördelt zu werden.

Insbesondere ist das Zellulose-basierte Kapseldeckel-Blatt an das Zellulose-basierte Blatt, das die umlaufende Seitenwand bildet, umlaufend gebördelt oder es ist eingerichtet, umlaufend an das Zellulose-basierte Blatt, das die umlaufende Seitenwand bildet, gebördelt zu werden.

Alternativ - und oftmals bevorzugt - ist der Kapseldeckel auf eine andere Weise an der umlaufenden Seitenwand befestigt oder an diese befestigbar. Beispielsweise kann der Kapseldeckel, beziehungsweise das Zellulose-basierte Kapseldeckel-Blatt eingerichtet sein, an die umlaufende Seitenwand geschweisst, beispielsweise mittels Ultraschallschweissen, zu werden.

Das Zellulose-basierte Kapseldeckel-Blatt kann einen Kunststoff, insbesondere einen biologisch abbaubaren Kunststoff, aufweisen, der mit Material der umlaufenden Seitenwand verschweissbar ist.

Beim Kunststoff kann es sich um den für die Versiegelung verwendeten Kunststoff handeln.

Die Verschweissung kann darauf basieren, dass der zur Verschweissung angeordnete Kunststoff des Kapseldeckels in Strukturen des Zellulose-basierten Blatts, das die umlaufende Seitenwand bildet, eindringt.

Alternativ kann der Kapseldeckel, beziehungsweise das Zellulose-basierte Kapseldeckel-Blatt eingerichtet sein, an die umlaufende Seitenwand geklebt zu werden.

Das Zellulose-basierte Kapseldeckel-Blatt kann eine Versiegelungsschicht oder eine Barriereschicht oder eine Versiegelungsschicht und eine Barriereschicht auf eine der zuvor beschriebenen Arten umfassen.

Insbesondere kann die Versiegelungsschicht oder die Barriereschicht oder bevorzugt die Versiegelungsschicht und die Barriereschicht den gesamten Bereich des Zellulose-basierten Kapseldeckel-Blatts, der den Innenraum mitbildet, durchgehend, beispielsweise auf der dem Innenraum zugewandten Seite, bedecken.

Alternativ oder ergänzend, kann das Zellulose-basierte Kapseldeckel-Blatt eine Versiegelungsschicht oder eine Barriereschicht oder eine Versiegelungsschicht und eine Barriereschicht auf eine der zuvor beschriebenen Arten umfassen, die nach aussen hin angeordnet ist/sind.

Das Zellulose-basierte Kapseldeckel-Blatt und das Zellulose-basierten Blatt können eine Versiegelungsschicht oder eine Barriereschicht oder eine Versiegelungsschicht und eine Barriereschicht auf eine der zuvor beschriebenen Arten umfassen und zwar so, dass nach der Befestigung des Zellulose-basierte Kapseldeckel-Blatts am Zellulose-basierten Blatt der gesamte durch diese beiden Blätter gebildete Innenraum und/oder die gesamte durch die beiden Blätter gebildete Aussenfläche mit der Versiegelungsschicht oder der Barriereschicht oder er Versiegelungsschicht und der Barriereschicht durchgehend ausgekleidet ist.

In einer Ausführungsform weist die Portionenkapsel das Zellulose-basierte Blatt, das die umlaufende Seitenwand bildet, das Zellulose-basierte Bodenbereichs-Blatt und das Zellulose-basierte Kapseldeckelblatt auf, wobei diese Blätter jeweils so die Versiegelungsschicht oder die Barriereschicht oder bevorzugt die Versiegelungsschicht und die Barriereschicht umfassen, dass der gesamte Innenraum der Portionenkapsel durchgehend mit der Versiegelungsschicht oder mit der Barriereschicht oder bevorzugt mit der Versiegelungsschicht und der Barriereschicht ausgekleidet ist.

Bei dieser Ausführungsform ist der Innenraum in der Regel ein geschlossener Innenraum.

Alternativ oder ergänzend, können die besagten Blätter die Versiegelungsschicht oder die Barriereschicht oder bevorzugt die Versiegelungsschicht und die Barriereschicht so umfassen, dass die gesamte durch die Blätter gebildete Aussenfläche durchgehend mit der Versiegelungsschicht oder mit der Barriereschicht oder bevorzugt mit der Versiegelungsschicht und der Barriereschicht ausgekleidet ist.

Unabhängig von der konkreten Realisierung des Bodenbereichs und des Kapseldeckels, kann der Bodenbereich und/oder der Kapseldeckel, beziehungsweise das Zellulose-basierte Blatt, dass diese bildet, Träger eines zusätzlichen, im Innern des Innenraums angeordneten Elements sein.

Beim zusätzlichen Element kann es sich beispielsweise um ein Element handeln, das eingerichtet ist, den Fluss einer über den Bodenbereich oder den Kapseldeckel eingeführten Flüssigkeit durch die Kapsel zu optimieren.

Beim zusätzlichen Element kann es sich beispielsweise um einen Filter handeln, insbesondere um einen Filter, der eingerichtet ist, ein über den Bodenbereich oder den Kapseldeckel der Portionenkapsel ausgeleitetes Getränk zu filtern.

Unabhängig von der konkreten Realisierung des Kapseldeckels, verschliesst der Kapseldeckel in Ausführungsformen den durch den Bodenbereich und die umlaufende Seitenwand gebildeten Innenraum oder er ist eingerichtet den durch den Bodenbereich und die umlaufende Seitenwand gebildeten Innenraum zu verschliessen.

Wie erwähnt, kann die Versiegelungsschicht oder die Barriereschicht oder die Versiegelungsschicht und die Barriereschicht den gesamten, dem Innenraum zugewandten Bereich des Kapseldeckels durchgehend bedecken, wenn der Kapseldeckel an der umlaufenden Seitenwand befestigt ist.

Der Kapseldeckel kann verschieden von einer blossen Folie oder Platte als dreidimensionales Objekt ausgebildet sein und bspw. eine Wölbung nach aussen bilden.

In Ausführungsformen zeichnet sich der Kapseldeckel dadurch aus, dass er radialinnerhalb von einem umlaufenden Deckel-Kragen, der während des Befestigens an der umlaufenden Seitenwand eine Befestigungspartie bildet, eine Wölbung nach aussen bildet, wobei der umlaufende Deckel-Kragen in seiner Dimensionierung auf einen Kragen der umlaufenden Seitenwand (beziehungsweise des Basiselements) abgestimmt ist. Der Kapseldeckel unterscheidet sich gemäss diesen Ausführungsformen also von einem flachen, bspw. folien- oder plattenartigen Deckelelement. Er ist ein dreidimensional geformter Körper.

Die Form des Kapseldeckels kann in solchen Ausführungsformen von aussen nach innen den Deckel-Kragen, einen gekrümmten Übergangsbereich und einen mittigen flachen Bereich aufweisen, der die eigentliche oberseitige Deckfläche bildet. Ein solcher flacher Bereich ist aufgrund des Übergangsbereichs, der die Wölbung bewirkt, von der Ebene des Deckel-Kragens nach aussen abgesetzt. Der Übergangsbereich kann bspw. S-förmig gekrümmt sein oder stetig von einer in einem Winkel zur Kragenebene stehenden äusseren Partie hin zum mittigen flachen Bereich gekrümmt verlaufen. Dabei ist die Dimensionierung beispielsweise so gewählt, dass der mittige flache Bereich optisch dominiert, indem er bspw. gleich gross wie oder nur unwesentlich (bspw. maximal 10%) kleiner als die Fläche des Bodenbereichs ist. Es kann insbesondere bei einer Ausführung der Portionenkapsel als insgesamt quader- oder würfelförmig vorgesehen sein, dass dieser flache Bereich mehr als 60% des Durchmessers und entsprechend mindestens 40% der Fläche, einnimmt.

Der Deckel-Kragen wird im Allgemeinen eine umlaufende, zur Kapseldeckelseite hin gewandte Fläche bilden, die sich von einer Aussenkante des Kragens bis zu einem Ansatz der Wölbung erstreckt. Es kann in Ausführungsformen vorgesehen sein, dass der Ansatz der Wölbung im Vergleich zu der Partie der Seitenwand, an welche der Kragen der umlaufenden Seitenwand anschliesst, nach innen versetzt ist. Ein solcher Versatz kann bspw. mindestens 0.2 mm betragen.

Die aus den zuvor beschriebenen Elementen "umlaufende Seitenwand", "Bodenbereich" und "Kapseldeckel" resultierende Portionenkapsel kann insbesondere so ausgebildet sein, dass das Extraktionsgut vollständig umschlossen wird, ohne bspw. durch eine Folie oder dergleichen abgedeckte Öffnung. Sie kann insbesondere hermetisch und sauerstoffdicht sein, bspw. indem sie mindestens eine genannten Diffusionsbarriere, insbesondere eine Versiegelungsschicht und/oder eine Barriereschicht, aufweist. Sie kann insbesondere die in diesem Text beschriebene Form mit einem rechteckigen Querschnitt haben.

Ein Aspekt der Erfindung betrifft ein Verfahren zur Herstellung einer Portionenkapsel, insbesondere einer Portionenkapsel gemäss einer der zuvor beschriebenen Ausführungsformen, aufweisend ein Basiselement mit einem Bodenbereich und einer umlaufenden Seitenwand.

Das erfindungsgemässe Verfahren umfasst folgende Schritte:
- Zur Verfügung stellen eines Zellulose-basierten Blatts.
   Beim Zellulose-basierten Blatt handelt es sich insbesondere um das in Zusammenhang mit der Portionenkapsel beschriebene Zellulose-basierte Blatt gemäss einer der beschriebenen Ausführungsformen.
- Formen der umlaufenden Seitenwand aus dem Zellulose-basierten Blatt, wobei das Formen der umlaufenden Seitenwand das Bilden einer vollständigen Wicklung des Zellulose-basierten Blatts um eine Basiselementachse umfasst.
   Die umlaufende Seitenwand kann nach dem Formen insbesondere wie in Zusammenhang mit der Portionenkapsel beschrieben geformt werden.
   Das Formen erfolgt insbesondere so, wie in Zusammenhang mit der Portionenkapsel offenbart.

Das Verfahren kann einen Schritt umfassen, in dem der Bodenbereich zur Verfügung gestellt wird. Der zur Verfügung gestellte Bodenbereich kann insbesondere ein Bodenbereich sein, wie er in Zusammenhang mit der Portionenkapsel offenbart wurde.

Das zur Verfügung stellen des Bodenbereichs kann beispielsweise mindestens einen der nachfolgenden Schritte umfassen:
- Zur Verfügung stellen eines Zellulose-basierten Bodenbereichs-Blatts.
   Beim Zellulose-basierten Bodenbereichs-Blatt kann es sich insbesondere um das in Zusammenhang mit der Portionenkapsel beschriebene, Zellulose-basierte Bodenbereichs-Blatt gemäss einer der beschriebenen Ausführungsformen handeln.
- Formen des Bodenbereichs aus dem Zellulose-basierten Bodenbereichs-Blatt.
   Das geformte Bodenbereichs-Blatt kann einen Bereich zur Befestigung an der umlaufenden Seitenwand, beispielsweise mittels Bördeln, Schweissen oder Kleben aufweisen.
- Bearbeiten des Zellulose-basierten Blatts, aus dem die umlaufende Seitenwand geformt wird, so dass das Zellulose-basierte Blatt ein Seitenwand-Teil, mit dem die vollständige Wicklung gebildet werden kann, und ein Bodenbereichs-Teil aufweist, aus dem der Bodenbereich gebildet werden kann.
   Das Zellulose-basierte Blatt kann beispielsweise entsprechend zugeschnitten werden. Ferner kann es mit Soll-Faltstellen versehen werden.

Das Verfahren kann einen Schritt umfassen, in dem der Bodenbereich an der Portionenkapsel ausgebildet wird.

Beispielsweise kann der Bodenbereich durch einen der nachfolgenden Schritte an der Portionenkapsel ausgebildet werden:
- Bördeln des Bodenbereichs, insbesondere eines entsprechend geformten Zellulose-basierten Bodenbereichs-Blatts, an die umlaufende Seitenwand.
- Formen der vollständigen Wicklung und des Bodenbereichs durch Umfalten vor, während oder nach dem Formen der umlaufenden Seitenwand. Insbesondere kann der Bodenbereichs-Teil des Zellulose-basierten Blatts, umgefalten werden.

Das Verfahren kann einen Schritt umfassen, in dem der Kapseldeckel zur Verfügung gestellt wird. Der zur Verfügung gestellte Kapseldeckel kann insbesondere ein Kapseldeckel sein, wie er in Zusammenhang mit der Portionenkapsel offenbart wurde.

Das zur Verfügung stellen des Kapseldecks kann beispielsweise mindestens einen der nachfolgenden Schritte umfassen:
- Zur Verfügung stellen eines Zellulose-basierten Kapseldeckel-Blatts.
   Beim Zellulose-basierten Kapseldeckel-Blatt kann es sich insbesondere um das in Zusammenhang mit der Portionenkapsel beschriebene, Zellulose-basierte Kapseldeckel-Blatt gemäss einer der beschriebenen Ausführungsformen handeln.
- Formen des Kapseldeckels aus dem Zellulose-basierten Kapseldeckel-Blatt.
   Das geformte Kapseldeckel-Blatt kann einen Bereich zur Befestigung an der umlaufenden Seitenwand, beispielsweise mittels Bördeln, Schweissen oder Kleben aufweisen, insbesondere wie in Zusammenhang mit der Portionenkapsel beschrieben.
- Bearbeiten des Zellulose-basierten Blatts, aus dem die umlaufende Seitenwand geformt wird, so dass das Zellulose-basierte Blatt ein Seitenwand-Teil aufweist, mit dem die vollständige Wicklung gebildet werden kann, und ein Kapseldeckel-Teil aufweist, aus dem der Kapseldeckel gebildet werden kann.
   Das Zellulose-basierte Blatt kann beispielsweise entsprechend zugeschnitten werden. Ferner kann es mit Soll-Faltstellen versehen werden.

Das Verfahren kann einen Schritt umfassen, in dem der Kapseldeckel an der Portionenkapsel ausgebildet wird.

Beispielsweise kann der Kapseldeckel durch einen der nachfolgenden Schritte ausgebildet werden:
- Befestigen des Kapseldeckels, insbesondere eines entsprechend geformten Kapseldeckel-Blatts an der umlaufenden Seitenwand, beispielsweise wie in Zusammenhang mit der Portionenkapsel beschrieben (z.B. Schweissen, Kleben, Bördeln).
- Bilden der vollständigen Wicklung und des Kapseldeckels durch Umfalten vor, während oder nach dem Formen der umlaufenden Seitenwand. Insbesondere kann der Kapseldeckel-Teil des Zellulose-basierten Blatts, umgefalten werden.

In einer Ausführungsform weist das Verfahren einen Schritt des Aufbringens einer Versiegelungsschicht oder einer Barriereschicht oder einer Versiegelungsschicht und einer Barriereschicht auf mindestens eines der folgenden Blätter auf: das Zellulose-basierten Blatt, das Zellulose-basierte Bodenbereichs-Blatt, das Zellulose-basierte Kapseldeckel-Blatt.

Bei der Versiegelungsschicht und der Barriereschicht handelt es sich insbesondere um Schichten, wie Sie in Zusammenhang mit der Portionenkapsel beschrieben sind.

Die Versiegelungsschicht und/oder Barriereschicht kann mit einem Verfahren aufgebracht werden, wie es in Zusammenhang mit der Portionenkapsel beschreiben wurde, beispielsweise durch Vakuumbeschichtung.

Die Versiegelungsschicht und/oder Barriereschicht kann auf dem Zellulose-basierten Blatt, dem Zellulose-basierten Bodenbereichs-Blatt und/oder dem Zellulose-basierten Kapseldeckel-Blatt wie in Zusammenhang mit der Portionskapsel beschreiben angeordnet werden.

Der Schritt des Aufbringens kann einem Schritt des Formens vorgelagert sein. Das heisst, die Versiegelungsschicht und/oder Barriereschicht können auf das planare Zellulose-basierten Blatt, das planare Zellulose-basierte Bodenbereichs-Blatt und/oder das planare Zellulose-basierte Kapseldeckel-Blatt aufgebracht werden.

Alternativ kann zumindest ein erster Schritt des Formens dem Schritt des Aufbringens vorgelagert sein.

Nachfolgend werden Ausführungsbeispiele der Erfindung anhand von Figuren beschrieben. Es zeigen:
- Fig. 1 eine Seitenansicht einer beispielhaften Portionenkapsel aufweisend ein Basiselement und einen Kapseldeckel;
- Fig. 2 eine Detailansicht des Basiselements;
- Fig. 3 eine Detailansicht des Kapseldeckels;
- Fig. 4a-c ein weiters beispielhaftes Basiselement (Fig. 4a), sowie das Zellulose-basierte Blatt (Fig. 4b) und das Zellulose-basierte Bodenbereichs-Blatt (Fig. 4c) aus dem es gebildet ist;
- Fig 5a-b: ein beispielhaftes Zellulose-basiertes Blatt (Fig. 5a) und ein beispielhaftes Zellulose-basiertes Bodenbereichs-Blatt (Fig. 5b) für ein Basiselement mit quadratischer Grundform
- Fig. 6 ein Verfahren zur Herstellung einer konsumbereiten Kaffee-Portionenkapsel.

In den Figuren bezeichnen gleiche Bezugszeichen gleiche oder analoge Elemente.

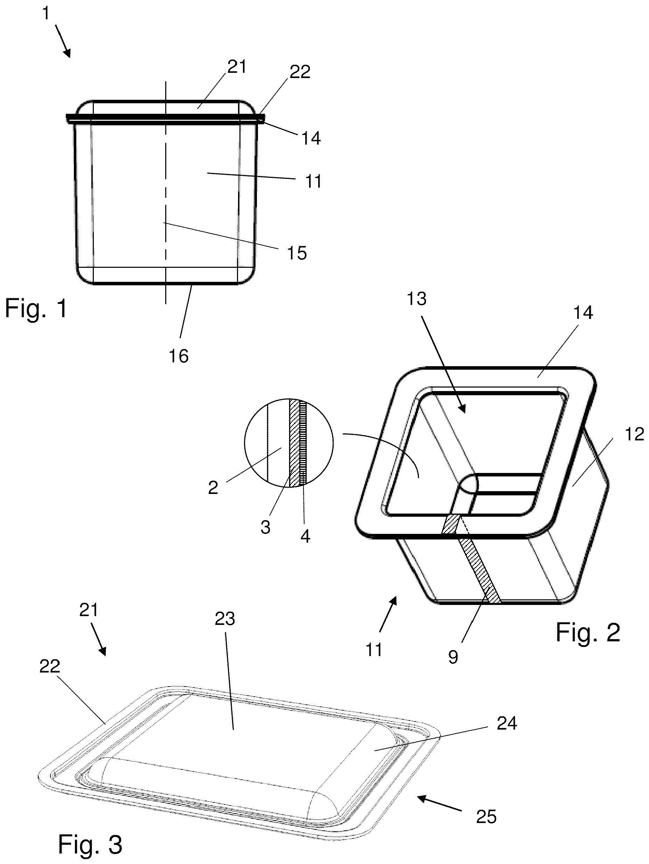

Die beispielhafte Portionenkapsel 1 gemäss Figur 1 weist ein Basiselement 11 mit einer Basiselementachse 15 auf. Das gezeigte Basiselement 11 hat die Form eines Bechers, wobei die Basiselementachse 15 eine Becherachse ist. Die Portionenkapsel 1 weist ferner einen Kapseldeckel 21 auf, der entlang eines umlaufenden Flansches 14 des Basiselements (Bechers) 11 befestigt ist, wobei Basiselement 11 und der Kapseldeckel 21 zusammen eine äussere Kapselwand bilden und einen Kapselinnenraum definieren. Das gezeigte Basiselement 11 bildet wie an sich bekannt einen hier leicht gewölbten Bodenbereich (Kapselboden) 16 und eine umlaufende Seitenwand 12. Der gezeigte Flansch 14 ist als ein Kragen der umlaufenden Seitenwand 12 realisiert.

In der gezeigten Ausführungsform sind Basiselement 11 und Kapseldeckel 21 aus einem Zellulose-basierten Blatt, genauer einem Papier-Blatt gebildet, wobei das Basiselement 11 aus einem ersten Zellulose-basierten Blatt 2 gebildet ist, und wobei der Kapseldeckel 21 aus einem zweiten Zellulose-basierten Blatt, dem Zellulose-basierten Kapseldeckel-Blatt 25, gebildet ist.

In der gezeigten Ausführungsform ist die Befestigung des Kapseldeckels 21 am Basiselement 11 durch Ultraschallschweissen oder durch Kleben vorgenommen worden. Alternativ ist beispielsweise auch thermisches Schweissen denkbar. Das thermische Schweissen kann beispielsweise unter Verwendung einer den Schweissprozess unterschützenden Prägung stattfinden. Die Prägung kann insbesondere auf einer zu verschweissenden Fläche der Schweisspartner, das heisst des Kapseldeckels 21 oder/oder des Basiselements 11, angeordnet sein.

Im Falle von Ultraschallschweissen weist zumindest die dem Kapseldeckel 21 zugewandte Fläche des Kragens 14 oder zumindest eine dem Kragen 14 zugewandte Fläche eines umlaufenden Deckel-Kragens 22 ein Material auf, das unter Ultraschall und Druck fliessfähig wird. Dieses Material ist so angeordnet und/oder die besagten Flächen sind so geformt, dass spätestens während des Ultraschallschweissens das am einen Stück (Kragen 14 oder Deckel-Kragen 22) angeordnete Material zumindest teilweise mit der zugewandten Fläche des anderen Stücks (Deckel-Kragen 22 oder Kragen 14) in Kontakt kommt. Falls beispielsweise nur der Kragen 14 des Basiselements 11 das Material aufweist, kommt dieses spätestens während des Ultraschallschweissens des Kapseldeckels 21 an das Basiselement 11 mit der dem Kragen 14 des Basiselements 11 zugewandten Fläche des Deckel-Kragens 22 in Kontakt.

Beispielsweise kann das Material an der Oberfläche des Kragens und/oder an der Oberfläche des umlaufenden Deckel-Kragens 22 angeordnet ist. Das Material kann aber auch von mindestens einer weiteren Schicht bedeckt sein, die es während des Ultraschallschweissprozesses durchdringt oder die während des Ultraschallschweissprozesses zumindest von einem Teil der zugewandten Oberfläche des Gegenstücks (Kragen 14 falls Deckel-Kragen 22 das bedeckte Material aufweist, Deckel-Kragen 22 falls Kragen 14 das bedeckte Material aufweist) durchdrungen wird. Bei diesem Teil kann es sich beispielsweise um einen umlaufenden Fortsatz handeln.

Beim Material kann es sich insbesondere um die nachfolgend beschriebene Flüssigkeitsversiegelungsschicht (kurz Versiegelungsschicht 3) handeln. Die nachfolgend beschriebene Barriereschicht, bei der es sich in den gezeigten Ausführungsformen um eine Gastransmissionsbarriereschicht, genauer eine Sauerstoffbarriereschicht 4, handelt, kann eine Schicht sein, die das Material in obigem Sinne bedeckt.

**Figur 2** zeigt eine Detailansicht des Basiselements 11. Das Basiselement 11 ist becherartig mit einer quadratischen Grundform ausgebildet. Das heisst, das Basiselement 11 hat im Wesentlichen die Form eines Würfels, wobei eine der sechs Seiten des Würfels fehlt und eine Öffnung 13 bildet. Über diese Öffnung 13 kann Extraktionsgut in den Innenraum des Basiselements 11 und somit in den Kapselinnenraum eingebracht werden. Andere Grundformen, wie beispielsweise eine runde Grundform (Basiselement hat im Wesentlichen Form eines an einer Flachseite offenen Zylinders) sind denkbar.

In der gezeigten Ausführungsform sorgen in erster Linie der umlaufende Rand 14, an dem der Kapseldeckel 21 befestigbar ist, abgerundete Kanten und allenfalls leicht gewölbte Seiten zu einer Abweichung von der Form eines Würfels. Je nachdem wie der Bodenbereich 16 mit der umlaufenden Seitenwand 12 verbunden ist, kann dies zu einer weiteren Abweichung von der Form eines Würfels führen. Dies ist insbesondere dann der Fall, wenn der Bodenbereich 16 an die umlaufende Seitenwand 12 gebördelt ist oder falls der Bodenbereich analog zum Kapseldeckel an die umlaufende Seitenwand 12 angebracht wird. Falls aber beispielsweise der Bodenbereich 16 durch eine im Vergleich zur Bördelung einfache Umfaltung des Zellulose-basierten Blatts 2, allenfalls umfassend ein Befestigungsgebiet und optional ein Versiegelungsgebiet (z.B. im Gebiet der Ecken), gebildet ist, kann die zusätzliche Abweichung von der Form eines Würfels eher klein sein.

Die umlaufende Seitenwand 12 des gezeigten Basiselements 11 ist als eine vollständige Wicklung des Zellulose-basierten Blatts 2 um die Basiselementachse 15 realisiert. Das heisst, das Zellulose-basierte Blatt 2 ist so um die Basiselementachse 15 angeordnet, dass sich ein Anfangsbereich und ein Endbereich des Zellulose-basierten Blatts 2 in einem Fixierbereich 9 der Wicklung überlappen. Im Fixierbereich 9 ist der Anfangsbereich dauerhaft mit dem Endbereich verbunden, beispielsweise indem die Bereiche aneinandergeklebt sind oder mittels Ultraschallschweissen verbunden sind. Die so realisierte, dauerhafte Wicklung bildet die umlaufende Seitenwand 12 des Basiselements 11.

Im Fixierbereich 9 weist sowohl der Anfangsbereich als auch der Endbereich eine Fläche auf, die bei der Fixierung miteinander in Kontakt bringbar sind. Mindestens eine dieser Flächen weist im Falle einer Fixierung durch Ultraschallschweissen ein Material auf, das unter Ultraschall und Druck fliessfähig wird. Dieses Material ist so angeordnet und/oder die besagten Flächen sind so geformt, dass spätestens während des Ultraschallschweissens das am einen Stück (Anfangsbereich oder Endbereich) angeordnete Material zumindest teilweise mit der zugewandten Fläche des anderen Stücks (Endbereich oder Anfangsbereich) in Kontakt kommt. Falls beispielsweise nur der Endbereich das Material aufweist, kommt dieses spätestens während der Fixierung mittels Ultraschallschweissens mit der dem Endbereich zugewandten Fläche des Anfangsbereichs in Kontakt.

Beispielsweise kann das Material an der Oberfläche des Anfangsbereichs und/oder an der Oberfläche des Endbereichs angeordnet ist. Das Material kann aber auch von mindestens einer weiteren Schicht bedeckt sein, die es während des Ultraschallschweissprozesses durchdringt oder die während des Ultraschallschweissprozesses zumindest von einem Teil der zugewandten Oberfläche des Gegenstücks (Anfangsbereich falls Endbereich das bedeckte Material aufweist, Endbereich falls Anfangsbereich das bedeckte Material aufweist) durchdrungen wird. Bei diesem Teil kann es sich beispielsweise um einen Fortsatz handeln.

Das Zellulose-basierte Blatt 2, aus dem die umlaufende Seitenwand 12 gebildet wird, weist in der gezeigten Ausführungsform eine Versiegelungsschicht 3 und eine Sauerstoffbarriereschicht 4 auf.

In der gezeigten Ausführungsform handelt es sich bei der Versiegelungsschicht 3 um eine PLA-Schicht und bei der Sauerstoffbarriereschicht 4 um eine SiOₓ Schicht.

Die Versiegelungsschicht 3 ist - abgesehen von einer allenfalls vorhandenen Haftschicht - direkt auf dem Zellulose-basierten Blatt 2 angeordnet, während die Sauerstoffbarriereschicht 4 - abgesehen von einer allenfalls vorhandenen Haftschicht - direkt auf der Versiegelungsschicht 3 angeordnet ist.

Versiegelungsschicht 3 und Sauerstoffbarriereschicht 4 sind so angeordnet, beziehungsweise das diese Schichten tragende Zellulose-basierte Blatt 2 ist so um die Basiselementachse 11 gewickelt, dass die Versiegelungsschicht 3 und die Sauerstoffbarriereschicht 4 gegen den Innenraum des Basiselements 11 hin auf dem Zellulose-basierten Blatt 2 angeordnet sind.

Versiegelungsschicht 3 und Sauerstoffbarriereschicht 4 sind so angeordnet, dass der gesamte durch das Basiselement 11 begrenzte Innenraum durch diese beiden Schichten durchgehende ausgekleidet ist.

Eine solche Realisierung des Zellulose-basierten Blatts 2 und der darauf befindlichen Schichten kann dazu führen, dass nur der Endbereich das Material, unter Ultraschall und Druck fliessfähig wird, in einer Art und Weise aufweist, dass es spätestens während dem Ultraschallschweissen mit dem Anfangsbereich in Kontakt kommen kann.

Dies ist insbesondere dann der Fall, wenn es sich - wie in der Ausführungsform gemäss Figur 2 - beim Material, das während des Ultraschallschweissprozess fliessfähig wird, um das Material der Versiegelungsschicht 3 handelt. Die Sauerstoffbarriereschicht 4 ist dann eine Schicht, die beim Ultraschallschweissprozess von verflüssigtem Material der Versiegelungsschicht 3 durchdrungen wird und/oder die von Material des Gegenstücks (des Anfangsbereichs) durchdrungen wird.

**Figur 3** zeigt eine Detailansicht des Kapseldeckels 21. In der gezeigten Ausführungsform wird der Kapseldeckel 21 aus dem Zellulose-basierten Kapseldeckel-Blatt 25 gebildet, das vor der Befestigung des Kapseldeckels 21 am Basiselement 11 vom Zellulose-basierten Blatt 2, aus dem die umlaufende Seitenwand 12 gebildet ist, separat ist.

Der gezeigte Kapseldeckel 21 weist die in Verbindung mit dem Basiselement 11 gezeigte Schichtabfolge von Versiegelungsschicht 3 und Sauerstoffbarriereschicht 4 auf, wobei diese Schichten so auf dem Zellulose-basierten Kapseldeckel-Blatt 25 angeordnet sind, dass der nach der Befestigung des Kapseldeckels 21 am Basiselement 11 gebildete, geschlossene Innenraum der Portionenkapsel 1 durchgehend mit diesen Schichten ausgekleidet ist.

Der Kapseldeckel 21 weist den umlaufenden Kragen 22 auf, der auf den Kragen 14 des Basiselements 11 abgestimmt ist, so dass der Kapseldeckel 21 das Basiselement 11 bei entsprechender Befestigung fluiddicht abschliessen kann.

Der in Figur 3 gezeigte Kapseldeckel 21 ist nicht als blosses Blatt ausgebildet, das abgesehen von der Dicke des Blatts, ein zweidimensionales Objekt darstellt. Solche zweidimensionalen Kapseldeckel sind aus dem Stand der Technik in Form von Folien oder Platten bekannt.

Stattdessen weist der in Figur 3 gezeigte Kapseldeckel 21 eine Wölbung 23 nach aussen auf. Diese Wölbung 23 bildet mittig einen flachen Bereich. Der flache Bereich ist gegenüber einer Ebene, die durch den umlaufenden Deckel-Kragen 22 definiert ist, nach aussen versetzt. Wölbung 23 und Deckel-Kragen 22 sind über einen Übergangsbereich 24 miteinander verbunden.

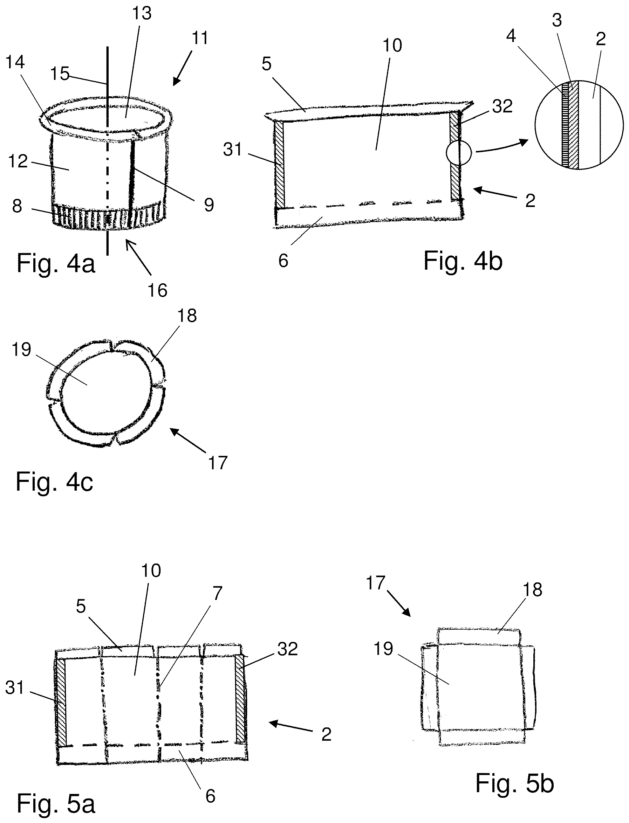

**Figur 4a** zeigt ein beispielhaftes Basiselement 11, das die Form eines Bechers mit runder Grundform hat. Das heisst, das Basiselement 11 hat im Wesentlichen die Form eines Zylinders, wobei eine Flachseite des Zylinders offen ist. Die offene Flachseite definiert die Öffnung 13 zum Einbringen des Extraktionsguts in den Innenraum des Basiselements 11 und somit in den Kapselinnenraum. Der Becher ist entlang der Basiselementachse 15, die in der gezeigten Ausführungsform als Becherachse betrachtet werden kann, orientiert.

Das gezeigte Basiselement 11 weist ferner einen Flansch (Kragen) 14 auf, der die Öffnung 13 umlaufend umgibt. Der Flansch 14 kann bis auf seine Form (kreisförmige statt quadratische Grundform) auf eine der zuvor beschriebenen Arten realisiert sein.

Ein Kapseldeckel 21 kann abgesehen von einer auf die Form des Flansches 14 und der Öffnung 13 abgestimmten Ausgestaltung auf eine der zuvor beschriebenen Arten realisiert sein. Der Kapseldeckel 21 kann auf einer der zuvor beschriebenen Arten am Basiselement 11 befestigbar sein oder befestigt sein.

Die umlaufende Seitenwand 12 des Basiselements 11 wird durch ein Zellulose-basiertes Blatt 2, das eine vollständige Wicklung um die Basiselementachse 15 bildet, gebildet. Das Zellulose-basierte Blatt 2, die Wicklung und dessen Fixierung in einem Fixierbereich 9 kann - abgesehen von Unterschieden, die durch die unterschiedliche Form des Basiselements 11 bedingt sind - auf eine der zuvor beschriebenen Arten realisiert sein.

Der Bodenbereich 16 des Basiselements 11 wird durch ein Zellulose-basiertes Bodenbereichs-Blatt 17 gebildet, das vor dem Formen des Basiselements 11 vom Zellulose-basierten Blatt 2 separat ist.

In der gezeigten Ausführungsform weist das Basiselement 11 eine Bördelung 8 an der der Öffnung 13 gegenüberliegenden Seite des Basiselements 11 auf.

Bei der Bördelung 8 handelt es sich um eine Bördelung zwischen dem Zellulose-basierten Blatt 2, das die umlaufende Seitenwand 12 bildet, und dem Zellulose-basierten Bodenbereichs-Blatt 17, das den Bodenbereich 16 bildet. Die Bördelung 8 ist so realisiert, dass der Bodenbereich 16 das Basiselement 11 dauerhaft und ohne Öffnungen oder "Lecks" abschliesst.

In anderen Worten ist das in Figur 4a gezeigte Basiselement ein Wickelbecher mit einem an die umlaufende Seitenwand des Wickelbechers gebördelten Bodenbereich.

**Figur 4b** zeigt das Zellulose-basierte Blatt 2 vor der Wicklung um die Basiselementachse 15.

Das Zellulose-basierte Blatt 2 weist einen Seitenwand-Bereich 10 auf, der nach der Wicklung die umlaufende Seitenwand 12 bildet.

Der Seitenwand-Bereich 10 kann den zuvor beschriebenen Anfangsbereich 31 und den zuvor beschriebenen Endbereich 32 zur Fixierung der Wicklung im Fixierbereich 9 umfassen.

Zumindest der Seitenwand-Bereich 10 weist in der gezeigten Ausführungsform die Versiegelungsschicht 3 und die Barriereschicht 4 auf.

Der Endbereich 32 und/oder der Anfangsbereich 31 kann eine vom restlichen Seitenwand-Bereich unterschiedliche Schicht oder Schichtabfolge aufweisen.

Das gezeigte Zellulose-basierte Blatt 2 weist einen Kragenbereich (Flanschbereich) 5 auf, der so angeordnet und geformt ist, dass er nach der Wicklung den umlaufenden Kragen 14 bildet.

Das gezeigte Zellulose-basierte Blatt 2 weist einen Bördelbereich 6 auf, der so angeordnet und geformt ist, dass er zusammen mit einem entsprechenden Bördelbereich 18 des Zellulose-basierten Bodenbereichsblatts 17 die zuvor beschriebene Bördelung bilden kann.

**Figur 4c** zeigt das Zellulose-basierte Bodenbereichs-Blatt 17 vor der Bördelung an das Zellulose-basierte Blatt 2.

Das Zellulose-basierte Bodenbereichs-Blatt 17 weist einen Bereich 19 auf, der nach der Bördelung den eigentlichen Bodenbereich 16 des Basiselements 11 bildet.

Ferner weist das gezeigte Zellulose-basierte Bodenbereichs-Blatt 17 den Bördelbereich 18 auf. Dieser ist so angeordnet und geformt ist, dass er zusammen mit dem Bördelbereich 6 des Zellulose-basierten Blatts 2 die zuvor beschriebene Bördelung bilden kann.

In der gezeigten Ausführungsform weist zumindest der Bereich 19, der nach der Bördelung den eigentlichen Bodenbereich 16 des Basiselements 11 bildet, die zuvor beschriebene Versiegelungsschicht 3 und die zuvor beschriebene Sauerstoffbarriereschicht 4 auf.

**Figur 5a** zeigt ein Zellulose-basiertes Blatt 2 vor der Wicklung um die Basiselementachse 15, das von der Form her alternativ zu dem in Figur 4b gezeigten Zellulose-basierten Blatt 2 ist. Das gezeigte Zellulose-basierte Blatt 2 ist so eingerichtet, dass es nach der Wicklung die umlaufende Seitenwand 12 und den umlaufenden Kragen 14 eines Basiselements 11 mit quadratischer Grundform, wie beispielhaft in Figur 2 gezeigt, bildet.

Im Vergleich zu dem in Figur 4b gezeigten Zellulose-basierten Blatt 2, weist das in Figur 5a gezeigte Zellulose-basierte Blatt 2 einen Seitenwand-Bereich 10 auf, der durch Soll-Faltstellen 7 in vier Teilbereiche unterteilt ist. Die vier Teilbereiche sind so angeordnet, dass sie nach der Wicklung die vier flachen Seiten der umlaufenden Seitenwand 12 bilden.

Ferner ist der Kragenbereich 5 in vier Teile aufgeteilt, die auf die vier Teilbereiche des Seitenwand-Bereichs 10 abgestimmt sind. Diese vier Teile sind so angeordnet und eingerichtet, dass sie nach der Wicklung des Zellulose-basierten Blatts 2 um die Basiselementachse 15 unter einem von null verschiedenen Winkel relativ zur Basiselementachse 15 verlaufen können und den umlaufenden Kragen 14 bilden können.

In der Regel verläuft der umlaufende Kragen 14 unter etwa 90° zur Basiselementachse 15, wie in den Figuren 1, 2 und 4a gezeigt. Das heisst, der umlaufende Kragen 14 ist zumindest näherungsweise in einer Ebene angeordnet, dessen Normale parallel zur Basiselementachse 15 verläuft.

**Figur 5b** zeigt nicht massstabsgetreu ein Zellulose-basiertes Bodenbereichs-Blatt 17, das auf das in Figur 5a gezeigte Zellulose-basierte Blatt 2 abgestimmt ist und an diesem über eine Bördelung 8 befestigt werden kann.

Das gezeigte Zellulose-basierte Bodenbereichs-Blatt 17 weist einen quadratischen Bereich 19 auf, der nach der Bördelung den eigentlichen Bodenbereich 16 des Basiselements 11 bildet.

Ferner ist der Bördelbereich 18, in vier Teilbereiche unterteilt, die auf die vier Teilbereiche des Seitenwandbereichs 10 abgestimmt sind. Die vier Teilbereiche des Bördelbereichs 18 sind so angeordnet und eingerichtet, dass sie vom quadratischen Bereich 19 weggefalten werden können.

Die vier Teilbereiche des Bördelbereichs 18 sind so angeordnet und geformt, dass sie zusammen mit dem Bördelbereich 6 des Zellulose-basierten Blatts 2 die zuvor beschriebene Bördelung bilden können.

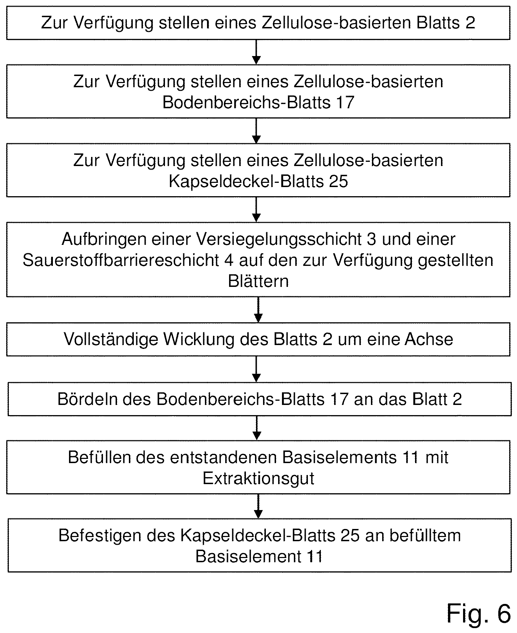

**Figur 6** zeigt schematisch ein beispielhaftes Verfahren zur Herstellung einer konsumbereiten Portionenkapsel 1. Im Schema werden auch optionale Schritte gezeigt.

Das gezeigte beispielhafte Verfahren gemäss Figur 6 führt insbesondere auf eine konsumbereite Portionenkapsel 1, die einen an die umlaufende Seitenwand 12 gebördelten Bodenbereich 16 und einen mittels Ultraschallschweissen an einem umlaufenden Kragen 14 der umlaufende Seitenwand 12 angebrachten Kapseldeckel 21 aufweist.

In einer ersten Phase des Verfahrens werden die zur Herstellung einer nicht gefüllten Portionenkapsel nötigen Elemente bereitgestellt. Insbesondere wird:
- Das Zellulose-basierte Blatt 2, aus dem letztlich die umlaufende Seitenwand 12 und den umlaufenden Kragen gebildet sind, zur Verfügung gestellt.
- Das Zellulose-basierte Bodenbereichs-Blatt 17, aus dem letztlich der Bodenbereich 16 gebildet ist, zur Verfügung gestellt.
- Das Zellulose-basierte Kapseldeck-Blatt 25, aus dem letztlich der Kapseldeckel 21 gebildet ist, zur Verfügung gestellt.
- Die Versiegelungsschicht 3 und die Sauerstoffbarriereschicht 4 auf den genannten Zellulose-basierten Blättern angebracht.

Vor oder nach dem Anbringen der Versiegelungsschicht 3 und der Sauerstoffbarriereschicht 4 können die genannten Zellulose-basierten Blätter zugeschnitten werden, mit Faltbereichen versehen werden (falls nötig), vorgeformt werden (falls nötig, beispielsweise Kapseldeckel) und/oder mit zusätzlich bearbeitetem Anfangsbereich 31 und/oder Endbereich 32 versehen werden (falls nötig). Alternativ oder ergänzend kann ein oder mehrere Befestigungsgebiete und/oder ein oder mehrere Versiegelungsgebiete vorbereiten werden.

In einer zweiten Phase des Verfahrens wird das Basiselement 11 gebildet. Dazu weist das Verfahren einen Schritt auf, in dem das Zellulose-basierte Blatt 2 so verformt wird, dass es eine vollständige Wicklung um eine Achse bildet. Diese Achse ist fortan die Basiselementachse 15.

Je nach Form der herzustellenden Portionenkapsel und je nach Schnitt des Zellulose-basierten Blatts 2 und des Zellulose-basierten Bodenbereichs-Blatts 25 weist die zweite Phase des Verfahrens vor, während oder nach dem Schritt des Wickelns einen Bördel-Schritt auf. In diesem wird das Zellulose-basierte Bodenbereichsblatt 17 an das Zellulose-basierte Blatt 2 gebördelt, so dass nach dem Schritt des Wickelns der Bodenbereich 16 die umlaufende Wand 12 gegen ein Ende hin abschliesst.

Die zweite Phase des Verfahrens weist ferner in der Regel einen Schritt auf, in dem die Wicklung arretiert wird, so dass sie dauerhaft ist. Dieser Schritt ist in der Regel zusätzlich zum Schritt des Bördelns.

In einer dritten Phase des Verfahrens wird das nach der zweiten Phase zur Verfügung stehende Basiselement 11 mit Extraktionsgut, beispielsweise Kaffee, gefüllt.

In einer vierten Phase des Verfahrens wird der Kapseldeckel 21 am gefüllten Basiselement 11 befestigt, um dieses zu verschliessen und die konsumbereite Portionenkapsel 1 zu erzeugen.

Dazu weist die vierte Phase einen Schritt auf, in welchem der Kapseldeckel 21, der allenfalls wie in Verbindung mit Figur 3 beschrieben vorgeformt sein kann, so auf dem Basiselement 11 positioniert wird, dass er die Öffnung 13 verschliesst und dass der umlaufende Kragen 14 des Basiselements 11 umlaufend mit dem Deckel-Kragen 22 in Kontakt ist.

Ferner weist die vierte Phase einen Schritt auf, in welchem die in Kontakt stehenden Kragen des Basiselements 11 und des Kapsel-Deckels 21 zwischen einem Amboss und einer Sonotrode mit Druck und Ultraschall beaufschlagt werden, so dass eine die ehemalige Öffnung 13 umlaufende Schweissung zwischen dem Kragen 14 des Basiselements 11 und dem Deckel-Kragen 22 entsteht.

Das Verfahren kann weitere Phasen und Schritte aufweisen. Beispielsweise einen Reinigungsschritt, das Anbringen von Beschriftungen und/oder Codierungen, Einfärbung etc.

### Bezugszeichen

- 1.: Portionenkapsel
- 2.: Zellulose-basiertes Blatt (Papier)
- 3.: Flüssigkeitsversiegelungsschicht (PLA)
- 4.: Gastransmissionsbarriereschicht (SiOₓ)
- 5.: Kragenbereich
- 6.: Bördelbereich
- 7.: Soll-Faltstelle
- 8.: Bördelung
- 9.: Fixierbereich (der Wickelung)
- 10.: Seitenwand-Bereich
- 11.: Basiselement
- 12.: Umlaufende Seitenwand
- 13.: Öffnung
- 14.: Kragen der umlaufenden Seitenwand
- 15.: Basiselementachse
- 16.: Bodenbereich (Kapselboden)
- 17.: Zellulose-basiertes Bodenbereichs-Blatt
- 18.: Bördelbereich
- 19.: Bereich, der nach Bördelung Bodenbereich 16 bildet
- 21.: Kapseldeckel
- 22.: Umlaufender Deckel-Kragen
- 23.: Wölbung
- 24.: Übergangsbereich
- 25.: Zellulose-basiertes Kapseldeckel-Blatt
- 31.: Anfangsbereich
- 32.: Endbereich

## Patentansprüche

1. Portionenkapsel (1) aufweisend ein Basiselement (11) mit einem Bodenbereich (16) und einer umlaufenden Seitenwand (12), wobei der Bodenbereich und die umlaufende Seitenwand einen Innenraum bilden, wobei die umlaufende Seitenwand ein Zellulose-basiertes Blatt (2) umfasst, **dadurch gekennzeichnet, dass** die umlaufende Seitenwand durch eine vollständige Wicklung des Zellulose-basierten Blatts um eine Basiselementachse (15) gebildet ist.

2. Portionenkapsel (1) nach Anspruch 1, wobei das Basiselement (11) becherartig ist und eine rechteckige, insbesondere quadratische, Grundform aufweist.

3. Portionenkapsel (1) nach Anspruch 1 oder 2, wobei das Zellulose-basierte Blatt (2) eine Versiegelungsschicht (3) oder eine Barriereschicht (4) oder eine Versiegelungsschicht (3) und eine Barriereschicht (4) aufweist.

4. Portionenkapsel (1) nach der Anspruch 3, wobei die Versiegelungsschicht (3) oder die Barriereschicht (4) oder die Versiegelungsschicht (3) und die Barriereschicht (4) den gesamte, dem Innenraum zugewandten Bereich durchgehend bedeckt.

5. Portionenkapsel (1) nach einem der Ansprüche 1-4, wobei der Bodenbereich (16) aus einem Zellulose-basierten Bodenbereichs-Blatt (17) geformt ist.

6. Portionenkapsel (1) nach der Anspruch 5, wobei der Bodenbereich (16) an die umlaufende Seitenwand (12) gebördelt ist.

7. Portionenkapsel (1) nach einem der Ansprüche 1-4, wobei der Bodenbereich (16) aus dem Zellulose-basierten Blatt (2) geformt ist.

8. Portionenkapsel (1) nach der Anspruch 7, wobei der Bodenbereich (16) durch einen umgefalteten Bereich der Zellulose-basierten Blatt (2) geformt wird.

9. Portionenkapsel (1) nach einem der Ansprüche 1-8, ferner aufweisend einen Kapseldeckel (21), der den durch den Bodenbereich (16) und die umlaufende Seitenwand (12) gebildeten Innenraums verschliesst oder dazu eingerichtet ist, den durch den Bodenbereich (16) und die umlaufende Seitenwand (12) gebildeten Innenraums zu verschliessen, wobei der Kapseldeckel aus einem Zellulose-basierten Kapseldeckel-Blatt (25) geformt ist.

10. Portionenkapsel (1) nach einem der Ansprüche 1-8, ferner aufweisend einen Kapseldeckel (21), der den durch den Bodenbereich (16) und die umlaufende Seitenwand (12) gebildeten Innenraums verschliesst oder dazu eingerichtet ist, den durch den Bodenbereich (16) und die umlaufende Seitenwand (12) gebildeten Innenraums zu verschliessen, wobei der Kapseldeckel aus dem Zellulose-basierten Blatt (2) geformt ist.

11. Portionenkapsel (1) nach Anspruch 9 oder 10, wobei das den Kapseldeckel formende, Zellulose-basierte Blatt (2, 25) eine Versiegelungsschicht (3) oder eine Barriereschicht (4) oder eine Versiegelungsschicht (3) und eine Barriereschicht (4) aufweist.

12. Portionenkapsel (1) nach der Anspruch 11, wobei die Versiegelungsschicht (3) oder die Barriereschicht (4) oder die Versiegelungsschicht (3) und die Barriereschicht (4) den gesamte, dem Innenraum zugewandten Bereich des Kapseldeckels (21) durchgehend bedeckt.

13. Verfahren zur Herstellung einer Portionenkapsel (1) aufweisend ein Basiselement (11) mit einem Bodenbereich (16) und einer umlaufenden Seitenwand (12), wobei das Verfahren folgende Schritte umfasst:
• Zur Verfügung stellen eines Zellulose-basiertes Blatt (2)
• Formen der umlaufenden Seitenwand aus dem Zellulose-basierten Blatt,
**dadurch gekennzeichnet, dass** das Formen der umlaufenden Seitenwand das Bilden einer vollständigen Wicklung des Zellulose-basierten Blatts um eine Basiselementachse (15) umfasst.

14. Verfahren nach Anspruch 13, ferner aufweisend mindestens einen der folgenden Schritte
• Zur Verfügung stellen eines Zellulose-basierten Bodenbereichs-Blatts (17), Formen des Bodenbereichs (16) aus dem Zellulose-basierten Bodenbereichs-Blatt und Bördeln des Bodenbereichs an die umlaufende Seitenwand (12) oder
Bearbeiten des Zellulose-basierten Blatts (2), so dass das Zellulose-basierte Blatt ein Seitenwand-Teil aufweist, mit dem die vollständige Wicklung gebildet werden kann, und ein Bodenbereich-Teil aufweist, aus dem der Bodenbereich (16) gebildet werden kann;
• Zur Verfügung stellen eines Zellulose-basierten Kapseldeckel-Blatts (25) und Formen des Kapseldeckels (21) aus dem Zellulose-basierten Kapseldeckel-Blatt oder
Bearbeiten des Zellulose-basierten Blatts (2), so dass das Zellulose-basierte Blatt ein Seitenwand-Teil aufweist, mit dem die vollständige Wicklung gebildet werden kann, und ein Kapseldeckel-Teil aufweist, aus dem der Kapseldeckel (21) gebildet werden kann.

15. Verfahren nach Anspruch 14, aufweisend den Schritt des Aufbringens einer Versiegelungsschicht (3) oder einer Barriereschicht (4) oder einer Versiegelungsschicht (3) und einer Barriereschicht (4) auf mindestens eines der folgenden Blätter: das Zellulose-basierten Blatt (2), das Zellulose-basierte Bodenbereichs-Blatt (17), das Zellulose-basierte Kapseldeckel-Blatt (25).
